# EUROPEAN PATENT APPLICATION

(11) **EP 4 704 309 A1**
(43) Date of publication of application: **04.03.2026**
(21) Application number: 23944249.4
(22) Date of filing: 26.12.2023
(51) Int. Cl.: H02K 1/276, H02K 1/278, H02K 15/03

(54) **ROTOR STRUCTURE AND MOTOR**

(30) Priority: 06.07.2023 CN 202310830831
(71) Applicant: Gree Electric Appliances, Inc. of Zhuhai, Zhuhai, Guangdong 519070 (CN); Zhuhai Kaibang Motor Manufacture Co., Ltd., Zhuhai, Guangdong 519110 (CN)
(72) Inventor: HU, Yusheng, Zhuhai, Guangdong 519070 (CN); CHEN, Bin, Zhuhai, Guangdong 519070 (CN); XIAO, Yong, Zhuhai, Guangdong 519070 (CN); LI, Xia, Zhuhai, Guangdong 519070 (CN); SHI, Jinfei, Zhuhai, Guangdong 519070 (CN); WANG, Qingkai, Zhuhai, Guangdong 519070 (CN)
(74) Representative: Zacco GmbH
(86) International application number: PCT/CN2023/142123
(87) International publication number: WO 2025/007528

(57) **Abstract**

This invention provides a rotor structure and a motor. The rotor structure comprises a rotor core (11), first permanent magnets (12), and a second permanent magnet (21). The rotor core (11) is provided with mounting grooves, and the first permanent magnets (12) are mounted in the mounting grooves. Along an axial direction of the rotor core (11), the axial height of the first permanent magnet (12) is greater than the axial height of the rotor core (11). The second permanent magnet (21) has an integral structure. The second permanent magnet (21) comprises axial portions (211) arranged at axial ends of the rotor core (11). The axial portions (211) are provided with grooves (213), and the parts of the first permanent magnets (12) extending out of the rotor core (11) along the axial direction are inserted into the grooves (213). According to the rotor structure of this invention, the magnetic flux concentration effect of the motor can be improved, and magnetic flux leakage of the axial ends of the first permanent magnets can be reduced. In addition, few parts and components are used, and few assembly steps are required, so that the assembly is simple and the production costs are low.

## Description

### Cross-Reference to Related Application

This invention claims priority to Chinese invention patent No. 202310830831.0, entitled "ROTOR STRUCTURE AND MOTOR" filed on July 6, 2023.

### Technical Field

This invention relates to the technical field of motors, and specifically, to a rotor structure and a motor.

### Background

With the improvement of the energy efficiency standard of a motor, higher requirements have been put forward for the energy efficiency level of the motor. For a permanent magnet motor, it is necessary to further improve the high efficiency and high torque density of the motor.

At present, among technical means to improve the motor efficiency and the torque density, one technical means is to embed permanent magnets to obtain a larger air gap flux density and a larger magnetic flux. However, due to a fixed magnetic circuit structure of a rotor, the improvement in energy efficiency is limited. Another means is to use a rotor structure to increase the salient pole ratio of the motor and increase the reluctance torque of the motor to compensate for the defect of the permanent magnet torque, and the efficiency can be equivalent to that of the permanent magnet motor. However, usually, a larger rotor volume is required, so that the torque density of the motor is inferior to that of the permanent magnet motor.

Therefore, for a current motor, how to further achieve high efficiency and high torque density of the motor is an urgent problem to be solved.

A permanent magnet rotor assembly is disclosed in a related technology. Two sets of permanent magnets in the permanent magnet rotor assembly (one set is magnetized along a circumferential direction of the rotor, and a second set provides a magnetic flux along an axial direction of the rotor) generate a magnetic flux gathered through pole pieces, there is an end plate made of a magnetic material, a circumferential magnetized magnet is placed in a circumferential gap between pole pieces, and a magnet providing an axial magnetic flux is placed in a gap between a pole piece array and the end plate. A magnetic end plate in Reference Document is used to provide a return path for the magnetic flux from the magnet providing the axial magnetic flux. However, in the field of home appliances, a rotor structure comprising a plurality of magnetic pole pieces, a plurality of scattered magnets, and magnetic end plates has many parts and components, is difficult in fixation of the magnetic end plates, and large in assembly difficulty of rotor assemblies, leading to high production and assembly costs, and making practical inventions difficult.

### Summary

This invention discloses a rotor structure and a motor. A magnetic flux concentration effect of the motor is able to be improved, and a magnetic flux leakage of axial ends of first permanent magnets is able to be reduced. In addition, few parts and components are used, and few assembly steps are required, so that the assembly is simple and the production costs are low.

To achieve the above objectives, according to one aspect of this invention, a rotor structure is provided. The rotor structure includes a rotor core, first permanent magnets, and a second permanent magnet. The rotor core is provided with mounting grooves, and the first permanent magnets are mounted in the mounting grooves. Along an axial direction of the rotor core, an axial height of the first permanent magnets is greater than an axial height of the rotor core. The second permanent magnet is of an integral structure. The second permanent magnet includes an axial portion arranged at at least one axial end of the rotor core. The axial portion is provided with grooves, and parts of the first permanent magnets extending out of the rotor core along the axial direction are inserted into the grooves.

In some embodiments, the second permanent magnet is injection-molded magnetic steel.

In some embodiments, the second permanent magnet further includes connecting portions, the connecting portions are filled in through holes provided by the rotor core or the mounting grooves, and axial portions, at two axial ends of the rotor core, of the second permanent magnet are connected by the connecting portions to form a whole.

In some embodiments, the grooves provided on the axial portion of the second permanent magnet does not penetrate through the axial portion, and a number of the grooves is the same as a number of rotor magnetic poles.

In some embodiments, the second permanent magnet further includes connecting portions, the second permanent magnet cooperates with the first permanent magnets by the grooves provided on the axial portion, the first permanent magnet and the second permanent magnet are both magnetic flux sources, and no other magnetic conduction components are arranged in the rotor structure except for the rotor core.

In some embodiments, a lug is formed between adjacent grooves, anda position of a polar region of the lug corresponds to a position of a polar region of the rotor core.

In some embodiments, on a plane perpendicular to the axial direction of the rotor core, a shape of the polar region of the lug is adapted to a shape of the polar region corresponding to the rotor core, and the polar region of the lug fills the polar region of the rotor core corresponding to the lug.

In some embodiments, in the axial direction of the rotor core, the rotor core and the axial portion are attached together.

In some embodiments, the second permanent magnet is alternately magnetized at NS poles along the axial direction of the rotor core.

In some embodiments, the polarity of a polar region of the second permanent magnet on a side close to the rotor core is a first polarity, and the polarities of two first permanent magnets on two adjacent sides of the polar region of the second permanent magnet on the side close to the rotor core are first polarities.

In some embodiments, the axial height of the rotor core is x, the axial height of the first permanent magnet is y, y>x, an axial height of the axial portion is z1, and an axial height of the lug is z2, wherein 0.2×(y-x)≤z1≤1.6×(y-x).

In some embodiments, 2×z2≥(y-x).

In some embodiments, z2=0.5×(y-x).

In some embodiments, 0.03≤(z1-z2)/z1≤0.7.

In some embodiments, on the plane perpendicular to the axial direction of the rotor core, an inner diameter of the second permanent magnet is Di2, and an inner diameter of the rotor core is Di1, wherein Di2≥Di1.

In some embodiments, an outer circumferential side of the rotor core is provided with limiting protrusions, and the limiting protrusions extend laterally from both sides of the rotor core in a circumferential direction and form a radial limit on the first permanent magnets.

In some embodiments, on the plane perpendicular to the axial direction of the rotor core, a maximum value of an outer diameter of the second permanent magnet is Do2, and a maximum value of an outer diameter of the rotor core is Do1, wherein Do2≤Do1.

In some embodiments, Do2=Do1.

**In** some embodiments, the second permanent magnet is injection-molded ferrite or injection-molded neodymium iron boron.

**In** some embodiments, the first permanent magnets are a sintered permanent magnet or an injection-molded permanent magnet.

**In** some embodiments, the rotor core is formed by stacking silicon steel sheets, or the rotor core is injection-molded magnetic steel; and on the plane perpendicular to the axial direction of the rotor core, along a radial direction, the rotor core is alternately magnetized at NS poles.

**In** some embodiments, the second permanent magnet is coated by injection molding or filled on the rotor core, or the second permanent magnet, the rotor core, and the first permanent magnets are separately manufactured and then assembled together.

**In** some embodiments, the rotor structure is filled with plastic sealing materials at ends and internal gaps and molded and sealed into a whole.

According to another aspect of this invention, a motor is provided. The motor includes a stator structure and a rotor structure. The rotor structure is the above rotor structure.

By applying the technical solution of this invention, a rotor structure includes a rotor core, first permanent magnets, and a second permanent magnet. The rotor core is provided with mounting grooves, and the first permanent magnets are mounted in the mounting grooves. Along an axial direction of the rotor core, an axial height of the first permanent magnets is greater than an axial height of the rotor core. The second permanent magnet is of an integral structure. The second permanent magnet includes an axial portion arranged at at least one axial end of the rotor core. The axial portion is provided with grooves, and parts of the first permanent magnets extending out of the rotor core along the axial direction are inserted into the grooves.

The first permanent magnets and the second permanent magnet are both arranged in a rotor, and the first permanent magnets and the second permanent magnet together provide flux linkage to the motor, so that an output of the motor is able to be increased. By the design of the relative position between the first permanent magnets and the second permanent magnet, the first permanent magnets are inserted into the groove of the second permanent magnet, the first permanent magnets serve as a part of a magnetic circuit for circulation of a magnetic flux line of the second permanent magnet to form a first magnetic circuit, the first magnetic circuit draws a magnetic flux line of a lug of the second permanent magnet and a part of a magnetic flux line of the axial portion enter the rotor core. Except for the first magnetic circuit, the magnetic flux lines of two adjacent poles of the axial portion of the second permanent magnet form a closed loop through the air at the end of a rotor assembly, so as to form a second magnetic circuit. After magnetic flux concentration of the magnetic flux lines of the first magnetic circuit and the second magnetic circuit on the rotor core, the magnetic flux lines enter air gaps and a stator, so that the magnetic flux concentration effect of the rotor can be significantly improved. In addition, except for the rotor core, no other magnetic conduction components are arranged in the rotor structure, few parts and components are used, and few assembly steps are required, so that the assembly is simple and the production costs are low. Moreover, a flux leakage line at the axial end of the first permanent magnets need to form a closed loop through the second permanent magnet, the second permanent magnet of a non-magnetic-conduction component weakens the flux leakage of the end of the first permanent magnets, and the flow direction of the magnetic flux line of the second magnetic circuit is opposite to the flow direction of the flux leakage line at the end of the first permanent magnets, resulting in a mutual exclusion effect, thereby further reducing the flux leakage of the axial end of the first permanent magnets, and improving the magnetic field strength of the rotor.

### Brief Description of the Drawings

The accompanying drawings of the specification, constituting a part of this invention, are used to provide a further understanding for this invention. Exemplary embodiments of this invention and descriptions thereof are used to explain this invention, but do not constitute any improper limitation on this invention. In the accompanying drawings:
Fig. 1 shows a three-dimensional structural view of a rotor structure according to an embodiment of this invention;
Fig. 2 shows an exploded structural view of a rotor structure according to an embodiment of this invention;
Fig. 3 shows a partial exploded structural view of a rotor structure according to an embodiment of this invention;
Fig. 4 shows a three-dimensional structural view of a second permanent magnet of a rotor structure according to an embodiment of this invention;
Fig. 5 shows a semi-sectional structural view of a three-dimensional structure of a second permanent magnet of a rotor structure according to an embodiment of this invention;
Fig. 6 shows a side-view schematic structural view of a second permanent magnet of a rotor structure according to an embodiment of this invention;
Fig. 7 shows a side-view structural view of a rotor structure according to an embodiment of this invention;
Fig. 8 shows a top-view schematic structural view of a rotor structure according to an embodiment of this invention;
Fig. 9 shows a top-view schematic structural view of a rotor structure according to an embodiment of this invention;
Fig. 10 shows a three-dimensional structural view of a rotor structure according to another embodiment of this invention;
Fig. 11 shows a partial exploded structural view of a rotor structure according to another embodiment of this invention;
Fig. 12 shows a semi-sectional structural view of a three-dimensional structure of a second permanent magnet of a rotor structure according to another embodiment of this invention;
Fig. 13 shows a top-view schematic structural view of a rotor structure according to another embodiment of this invention;
Fig. 14 shows a cross-sectional view taken along a line A-A of Fig. 13;
Fig. 15 shows a cross-sectional view taken along a line B-B of Fig. 13;
Fig. 16 shows a top-view schematic structural view of a second permanent magnet of a rotor structure according to another embodiment of this invention;
Fig. 17 shows a cross-sectional view taken along a line B-B of Fig. 16;
Fig. 18 shows a cross-sectional view taken along a line A-A of Fig. 16;
Fig. 19 shows a schematic view of polarity directions of a rotor structure of this invention;
Fig. 20 shows an illustrative view of a magnetic circuit of a rotor structure of this invention;
Fig. 21 shows a comparison view of magnetic flux concentration coefficients of a motor in an embodiment of this invention and a motor in a related technology;
Fig. 22 shows a comparison view of flux leakage coefficients of a motor in an embodiment of this invention and a motor in a related technology;
Fig. 23 shows a comparison view of no-load flux linkage of a motor in an embodiment of this invention and a motor in a related technology;
Fig. 24 shows a comparison view of air gap flux density of a motor in an embodiment of this invention and a motor in a related technology; and
Fig. 25 shows a comparison view of torque-current characteristics of a motor in an embodiment of this invention and a motor in a related technology.

The above accompanying drawings have the following reference numerals:
11. rotor core; 111. limiting protrusion; 12. first permanent magnet; 21. second permanent magnet; 211. axial portion; 212. connecting portion; 213. groove; 214. lug.

### Detailed Description of the Embodiments

It should be noted that in the case of no conflict, embodiments in this invention and features in the embodiments may be combined with each other. This invention will be described in detail below with reference to the accompanying drawings in conjunction with the embodiments.

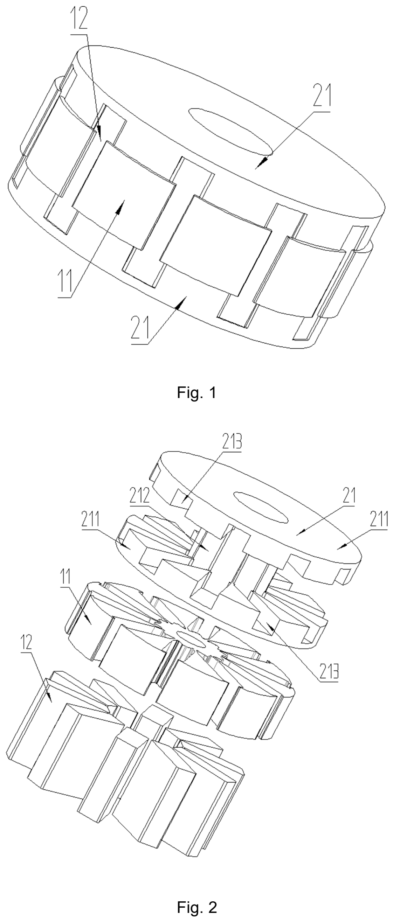

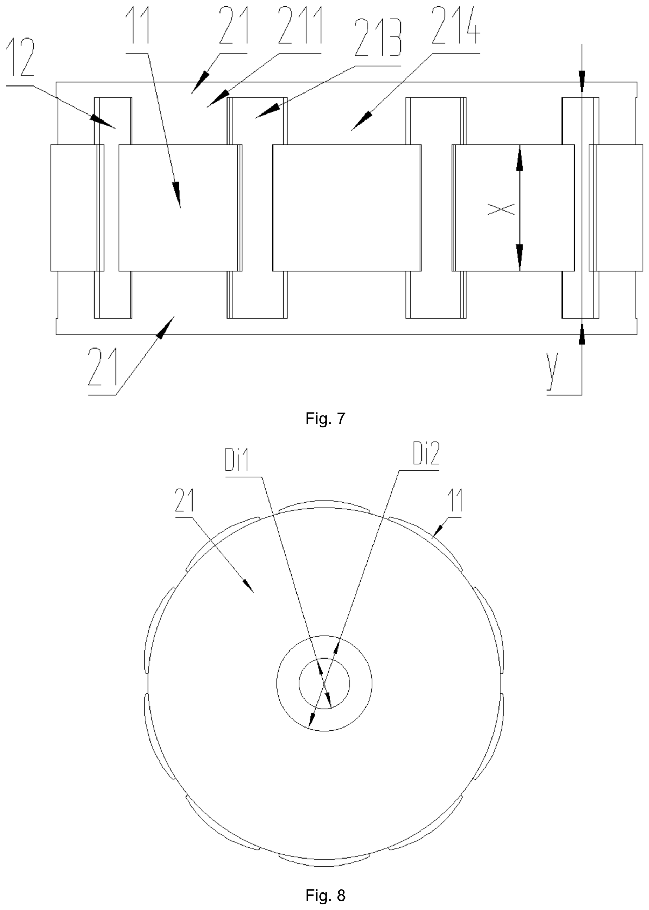

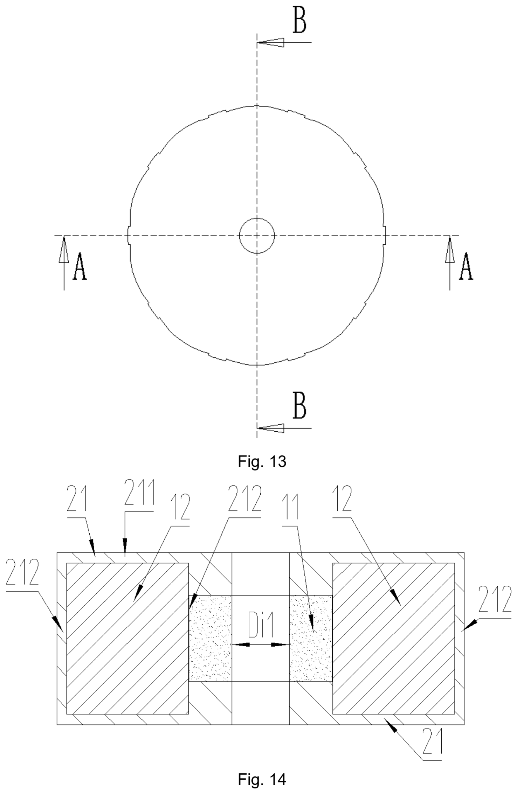

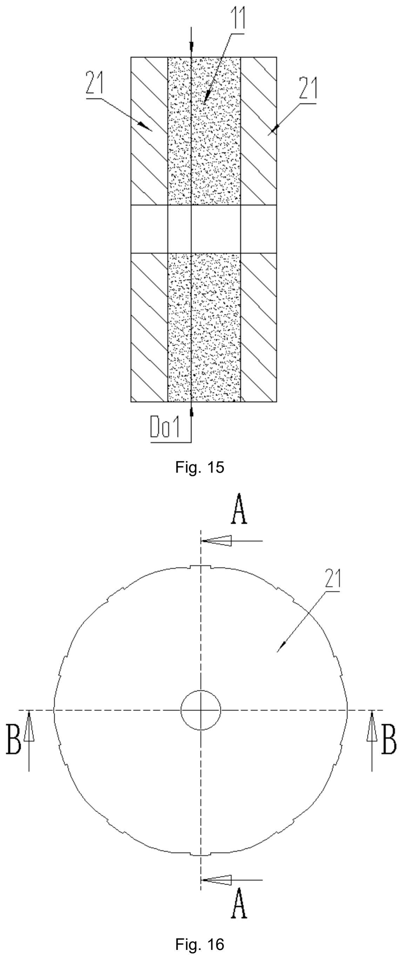

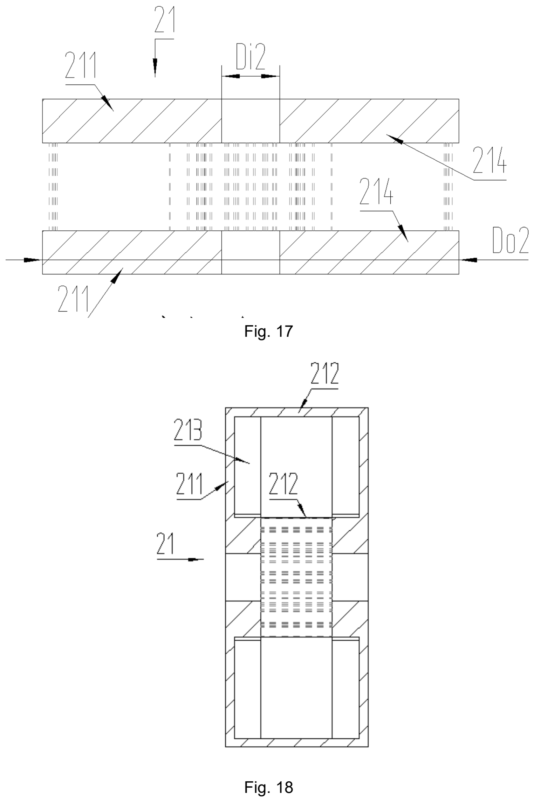

Referring to Fig. 1 to Fig. 19, according to the embodiments of this invention, a rotor structure includes a rotor core 11, first permanent magnets 12, and a second permanent magnet 21. The rotor core 11 is provided with mounting grooves, and the first permanent magnets 12 are mounted in the mounting grooves. Along an axial direction of the rotor core 11, an axial height of the first permanent magnet 12 is greater than an axial height of the rotor core 11. The second permanent magnet 21 is of an integral structure. The second permanent magnet 21 includes an axial portion 211 arranged at at least one axial end of the rotor core 11. The axial portion 211 is provided with grooves 213, and parts of the first permanent magnets 12 extending out of the rotor core 11 along the axial direction are inserted into the grooves 213.

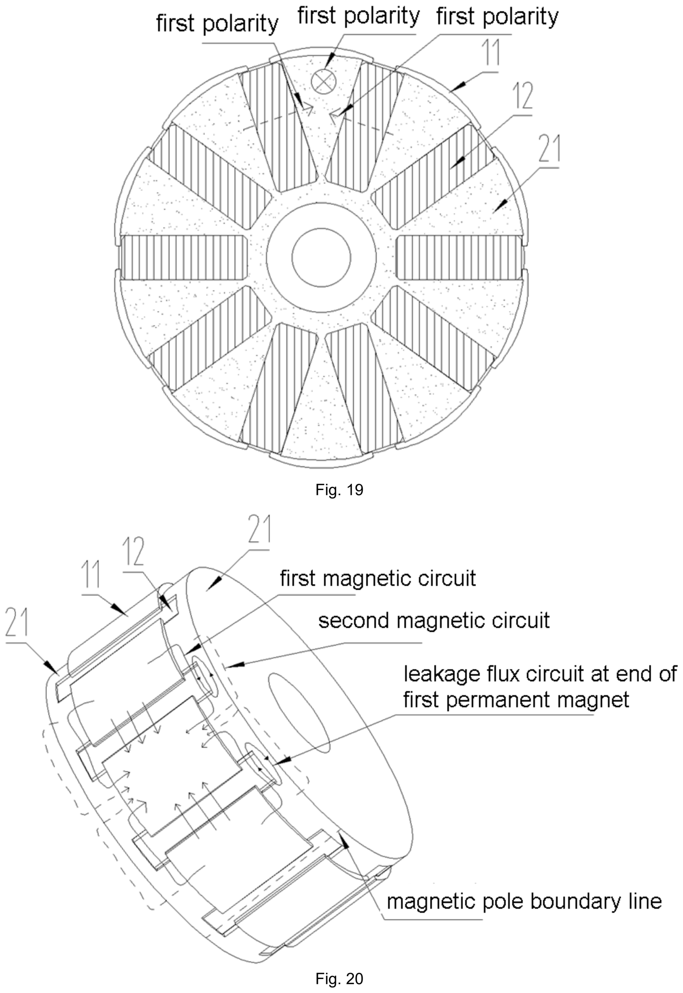

As shown in Fig. 20, the first permanent magnet 12 and the second permanent magnet 21 are both arranged in a rotor, and the first permanent magnet 12 and the second permanent magnet 21 together provide flux linkage to a motor, so that an output of the motor is able to be increased. By the design of the relative position between the first permanent magnet 12 and the second permanent magnet 21, the first permanent magnet 12 is inserted into the groove 213 of the second permanent magnet 21, the first permanent magnet 12 serves as a part of a magnetic circuit for circulation of a magnetic flux line of the second permanent magnet 21 to form a first magnetic circuit, the first magnetic circuit draws a magnetic flux line of a lug 214 of the second permanent magnet 21 and a part of a magnetic flux line of the axial portion 211 enter the rotor core 11. Except for the first magnetic circuit, the magnetic flux lines of two adjacent poles of the axial portion 211 of the second permanent magnet 21 form a closed loop through the air at the end of a rotor assembly, so as to form a second magnetic circuit. After magnetic flux concentration of the magnetic flux lines of the first magnetic circuit and the second magnetic circuit on the rotor core **11,** the magnetic flux lines enter air gaps and a stator, so that the magnetic flux concentration effect of the rotor is able to be significantly improved. **In** addition, except for the rotor core **11,** no other magnetic conduction components are arranged in the rotor structure, a flux leakage line at the axial end of the first permanent magnet 12 needs to form a closed loop through the second permanent magnet 21, the second permanent magnet 21 of a non-magnetic-conduction component weakens the flux leakage of the end of the first permanent magnet 12, and the flow direction of the magnetic flux line of the second magnetic circuit is opposite to the flow direction of the flux leakage line at the end of the first permanent magnet 12, resulting in a mutual exclusion effect, thereby further reducing the flux leakage of the axial end of the first permanent magnet 12, and improving the magnetic field strength of the rotor.

By the cooperated design of the first permanent magnet 12 and the second permanent magnet 21 in the rotor structure, the first permanent magnet 12 provides a return magnetic circuit for the magnetic flux of the second permanent magnet 21, and there is no need to add an additional magnetic conduction end plate that cooperates with the magnetic circuit of the second permanent magnet 21, thereby eliminating the magnetic conduction dependence of the second permanent magnet 21 on the magnetic conduction end plate. Moreover, the second permanent magnet 21 has an integral structure, few parts and components of the rotor are used, and few assembly steps are required, so that the assembly is simple and the production costs are low.

**In** an embodiment, the first permanent magnet 12 is magnetized in a tangential direction, and the second permanent magnet 21 is magnetized in an axial direction. In this embodiment, the first permanent magnet 12 with a greater axial height is set to be magnetized in the tangential direction, and the second permanent magnet 21 arranged at the axial end of the rotor core **11** is magnetized in the axial direction, so as to achieve continuous flux linkage of the first permanent magnet 12 and the second permanent magnet 21, so that the first permanent magnet 12 and the second permanent magnet 21 are able to more effectively provide flux linkage to the motor jointly to effectively increase the output of the motor.

**In** an embodiment, the second permanent magnet 21 is injection-molded magnetic steel. By using the injection-molded magnetic steel, on the one hand, the saturation of the rotor is able to be reduced, and the iron loss is able to be reduced; and on the other hand, the injection-molded magnetic steel has a higher degree of freedom in shape, so that the manufacturing difficulty of the second permanent magnet 21 and the rotor structure is able to be reduced.

**In** an embodiment, the second permanent magnet 21 is injection-molded ferrite or injection-molded neodymium iron boron, and the second permanent magnet 21 may also be injection-molded magnetic steel of other material types.

In an embodiment, at least one of the axial ends of the rotor core 11 is provided with an axial portion 211, which is able to sort the magnetic circuit at the end of the motor, so that the torque density is larger, the motor efficiency is higher, and the high performance of the motor is ensured. In the axial direction of the rotor core 11, the rotor core 11 and the axial portion 211 are attached together to reduce a loss of the flux linkage of the second permanent magnet 21 during circulation.

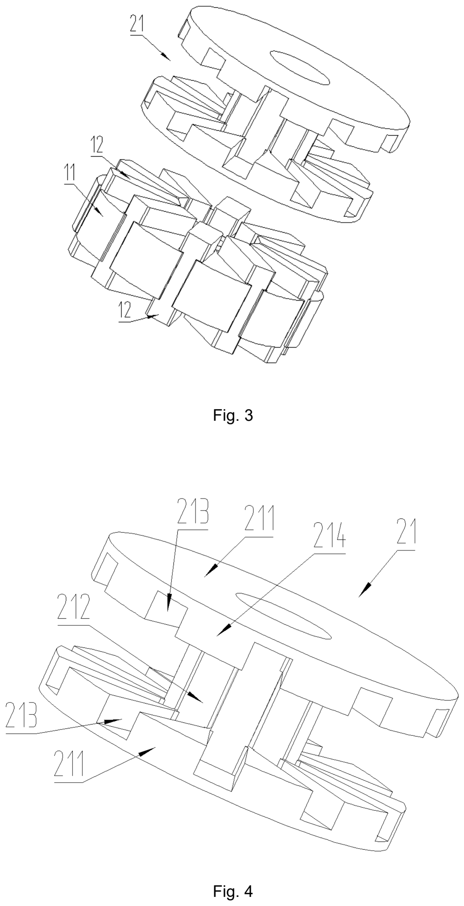

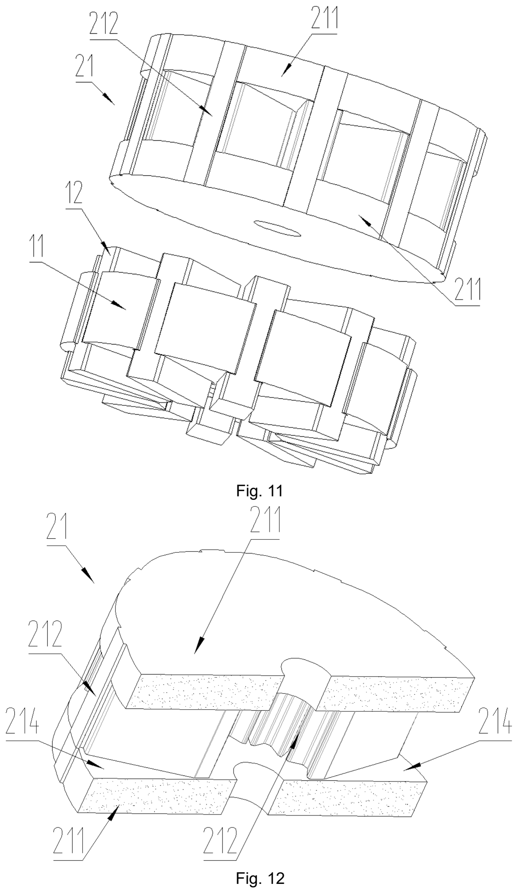

In an embodiment, the second permanent magnet 21 further includes connecting portions 212, the connecting portions 212 are filled in through holes provided by the rotor core 11 or the mounting grooves, and the axial portions 211 of two ends of the second permanent magnet 21 are connected through the connecting portions 212 to form a whole. As shown in Fig. 4, in an implementation of this invention, the second permanent magnet 21 includes axial portions 211 and connecting portions 212, wherein the connecting portions 212 are filled in the through holes provided on a side of the mounting groove close to a central axis of the rotor, and the connecting portions 212 are connected with two axial portions 211 arranged at the axial ends of the rotor core 11 to form a whole. Fig. 12 shows another implementation of this invention. In this implementation, the connecting portions 212 include a portion filled in the through hole provided on the side of the mounting groove close to the central axis of the rotor, and a portion filled in the through holes provided on a side of the rotor core 11 close to an outer circle of the rotor, and the axial portions 211 and the connecting portions 212 form a cage structure. By filling the connecting portions 212, the second permanent magnet 21 is of an integral structure, so that the assembly difficulty of the rotor is able to be reduced, the assembly steps of the rotor is able to be reduced, the process is able to be simplified, and the cost is able to be saved.

The second permanent magnet 21 includes axial portions 211 and connecting portions 212, the second permanent magnet 21 cooperates with the first permanent magnets 12 by the grooves 213 provided on the axial portions 211, the first permanent magnet 12 and the second permanent magnet 21 are both magnetic flux sources, and no other magnetic conduction components are arranged in the rotor structure except for the rotor core 11.

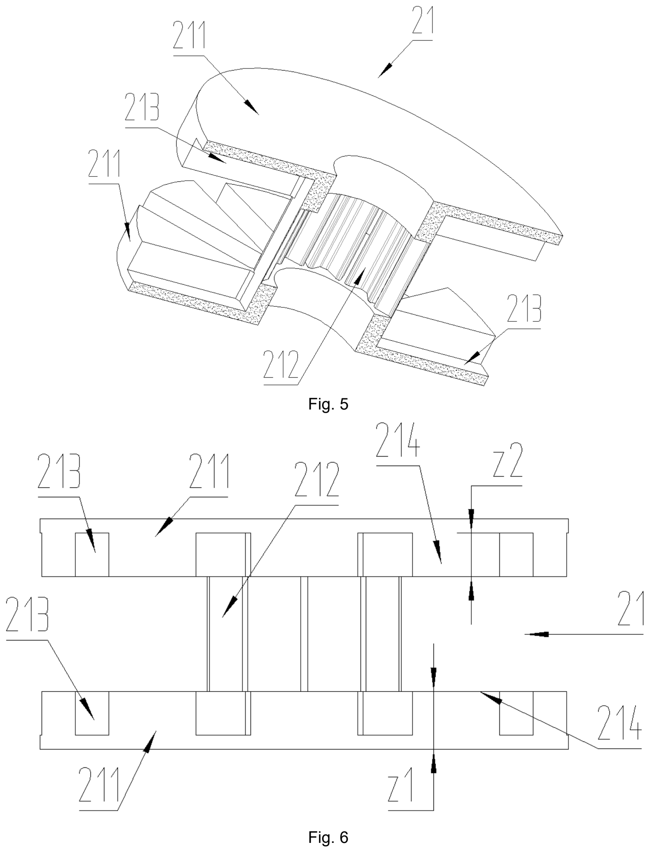

In an embodiment, the grooves 213 provided on the axial portion 211 of the second permanent magnet 21 does not penetrate through the axial portion 211, a number of the grooves 213 is the same as a number of rotor magnetic poles, and a lug 214 is formed between adjacent grooves 213. The groove 213 does not penetrate through the axial portion 211, so that the axial portion 211 is a whole. As shown in Fig. 5, in an implementation of this invention, a lug 214 is formed between two adjacent grooves 213, and outer sides between two adjacent lugs 214 are disconnected, so that the flux leakage at an outer circle of the rotor is able to be reduced. To ensure the strength of the rotor, a magnetic bridge is arranged on an inner side of the rotor core 11, and the second permanent magnet 21 connected to an inner side of the lug 214 is conducive to saturation of the magnetic bridge, thereby reducing the flux leakage of the first permanent magnet 12 at the magnetic bridge on the inner side of the rotor core 11.

In an embodiment, a position of a polar region of the lug 214 corresponds to a position of a polar region of the rotor core 11. That is, the polar region of the lug 214 of the second permanent magnet 21 generates a magnetic flux, the polar region of the rotor core 11 corresponding to the position of the polar region of the lug 214 of the second permanent magnet 21 is a magnetic circuit of the magnetic flux, and the two polar regions are correspondingly arranged to shorten the magnetic circuit as much as possible and reduce the magnetic loss.

In an embodiment, on a plane perpendicular to the axial direction of the rotor core 11, a shape of the polar region of the lug 214 is adapted to a shape of a corresponding polar region of the rotor core 11, and one polar region of the lug 214 fills the corresponding polar region of the rotor core 11. The "filling" here means that on the plane perpendicular to the axial direction of the rotor core 11, there is no gap between the lug 214 and the rotor core 11.

In an embodiment, the second permanent magnet 21 is alternately magnetized at NS poles along the axial direction of the rotor core 11.

The polarity of one polar region of the second permanent magnet 21 on a side close to the rotor core 11 is a first polarity, and the polarities of two first permanent magnets 12 on two adjacent sides of the one polar region of the second permanent magnet 21 on the side close to the rotor core 11 are first polarities. That is, the polarity of the one polar region of the second permanent magnet 21 on the side close to the rotor core 11 is the same as the polarities of two first permanent magnets 12 on two adjacent sides of the one polar region of the second permanent magnet 21 on the side close to the rotor core 11. In an embodiment shown in Fig. 19, the second permanent magnet 21 is magnetized in the axial direction, and the first permanent magnets 12 are magnetized in the tangential direction. At a certain pole, the magnetization directions of the first permanent magnets 12 and the second permanent magnet 21 point towards the rotor core 11. In this magnetization manner, the superposition of the flux linkage of the first permanent magnets 12 and the second permanent magnet 21 is able to be achieved, thereby improving the no-load flux linkage.

In an embodiment, the axial height of the rotor core 11 is x, the axial height of the first permanent magnet 12 is y, y>x, an axial height of the axial portion 211 is z1, and an axial height of **the lug 214** is z2, wherein 0.2×(y-x)≤z1≤1.6×(y-x).

In an embodiment, 2×z2≥(y-x), which is able to avoid an interference between the first permanent magnets 12 and the axial portion 211 of the second permanent magnet 21 to achieve an assembly of the first permanent magnets 12 and the second permanent magnet 21.

In an embodiment, z2=0.5×(y-x), which is able to form an optimal cooperation to effectively avoid the gap between the first permanent magnet 12 and the second permanent magnet 21, thereby reducing the magnetic loss.

In an embodiment, 0.03≤(z1-z2)/z1≤0.7, which is able to allow the portion of the groove 213 that does not penetrate through the axial portion 211 to have a certain axial thickness proportion in the axial portion 211, so as to ensure a structural strength of the second permanent magnet 21.

In an embodiment, on the plane perpendicular to the axial direction of the rotor core 11, an inner diameter of the second permanent magnet 21 is Di2, and an inner diameter of the rotor core 11 is Di1, wherein Di2≥Di1. An inner hole of the rotor core 11 needs to be provided with a rotating shaft. On the one hand, the above size relationship is able to make way for the assembly of the rotating shaft; and on the other hand, without affecting the assembly of the rotating shaft, a plastic sealing material or other materials is able to be filled in an inner hole of the second permanent magnet 21 to enhance the strength of the rotor.

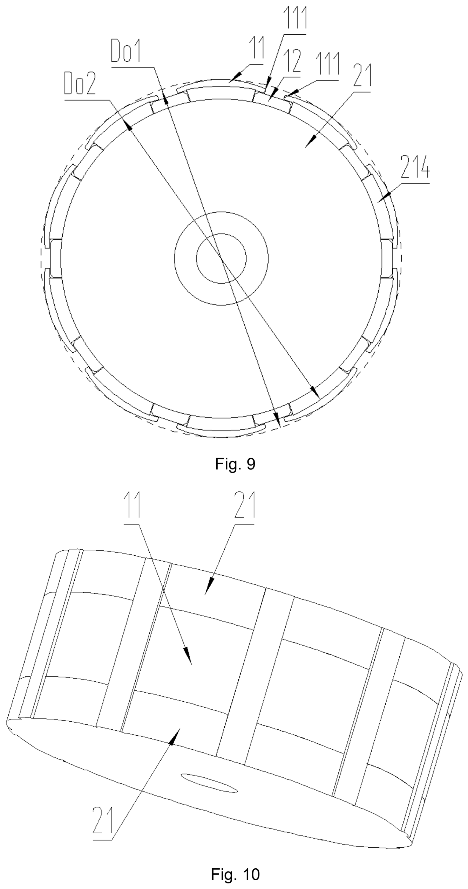

In an embodiment, as shown in Fig. 10, Di2=Di1, that is, the inner diameter of the second permanent magnet 21 is the same as the inner diameter of the rotor core 11, so that a magnetic supply surface of the second permanent magnet 21 is able to be increased to improve the flux linkage contribution of the second permanent magnet 21.

In an embodiment, an outer circumferential side of the rotor core 11 is provided with limiting protrusions 111, and the limiting protrusions 111 extend laterally from both sides of the rotor core 11 in a circumferential direction and form a radial limit on the first permanent magnets 12.

In this embodiment, the limiting protrusions 111 are located at an outermost circumference of the rotor core 11 and extend along a circumferential direction from two side surfaces in the circumferential direction of the rotor core 11, and two limiting protrusions 111 extending towards each other are arranged at an interval to form an open slot structure while radially limiting the first permanent magnets 12, thereby reducing the radial flux leakage of the first permanent magnets 12.

In an embodiment, an outer circumferential wall of the rotor core 11 includes a plurality of arc surfaces arranged at intervals, and a distance between the arc surfaces and the central axis of the rotor core 11 decreases progressively from a middle to both ends along the circumferential direction.

In this embodiment, since the rotor core 11 forms the open slot structure, the outer circumferential structure of the rotor core 11 is not a complete circle, but includes a plurality of arc segments arranged at intervals, wherein a middle of each arc segment protrudes outward along the radial direction to form an arc structure, a center of the arc structure is misaligned with a center of an outer circle of the rotor, which is able to improve the air gap flux density between a stator and a rotor, and is more conducive to forming a sine curve and improving the working performance of the motor.

In an embodiment, on the plane perpendicular to the axial direction of the rotor core 11, a maximum value of an outer diameter of the second permanent magnet 21 is Do2, and a maximum value of an outer diameter of the rotor core 11 is Do1, wherein Do2≤Do1.

In an embodiment, Do2=Do1.

For the motor, on the one hand, an outer side of the rotor structure is sleeved with a stator structure, and an air gap is formed between the rotor structure and the stator structure, so that this arrangement is able to make way for the assembly of the stator structure; and on the other hand, to ensure that the first permanent magnet 12 will not fall off after being assembled into the rotor core 11, an outer circle of the rotor core 11 is provided with limiting protrusions 111, the limiting protrusions 111 have a small magnetic circuit area and are prone to saturation, the position of the limiting protrusion 111 is close to the air gap and is a magnetic flux gathering position with a large iron loss, and Do2≤Do1, which is able to allow the magnetic flux of the second permanent magnet 21 to avoid the position of the limiting protrusion 111, thereby reducing the iron loss of the motor. In a motor with a low iron loss proportion, Do2=Do1 is a better choice.

In an embodiment, the first permanent magnet 12 is a sintered permanent magnet or an injection-molded permanent magnet, which is able to be determined according to the usage occasion, usage temperature, and the like of the motor.

In an embodiment, the rotor core 11 is formed by stacking silicon steel sheets, or the rotor core 11 is injection-molded magnetic steel; and on the plane perpendicular to the axial direction of the rotor core 11, along the radial direction, the rotor core 11 is alternately magnetized at NS poles.

The rotor core 11 is a path carrier for flux linkage circulation of the first permanent magnet 12 and the second permanent magnet 21, and plays a role in unblocking and guiding the flux linkage.

**In** an embodiment, the rotor core **11** is formed by stacking silicon steel sheets and thus has better magnetic permeability.

**In** an embodiment, the rotor core **11** is injection-molded magnetic steel, and after the rotor core **11** is magnetized, the rotor core **11** has a drawing effect on the flux linkage of the first permanent magnet 12 and the second permanent magnet 21, and is also able to guide the flux linkage to enter the air gap and the stator after magnetic flux concentration.

**In** an embodiment, the second permanent magnet 21 is coated by injection molding or filled on the rotor core **11.**

**In** an embodiment, the second permanent magnet 21, the rotor core **11,** and the first permanent magnet 12 are separately manufactured and then assembled together.

The second permanent magnet 21 and the first permanent magnet 12 are able to be processed and manufactured in different manners, so the manufacturing manner of the rotor is able to be selected according to production conditions to improve the flexibility of production and manufacturing of the rotor structure.

**In** an embodiment, the rotor structure is filled with plastic sealing materials at ends and internal gaps and sealed into a whole, so that the overall structural strength of the rotor assembly is able to be ensured.

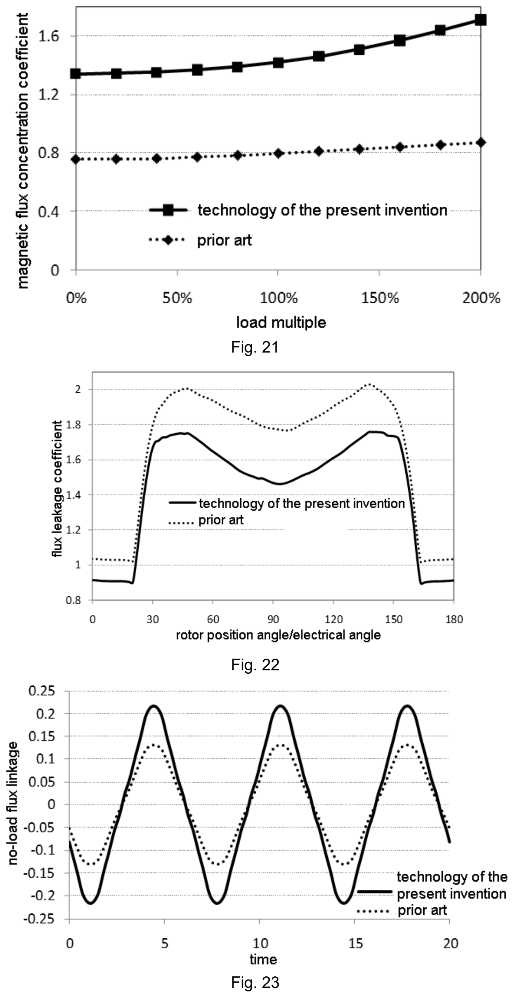

With reference to Fig. 21, compared to motors in the related art, the magnetic flux concentration coefficient of the motor using the rotor structure in the embodiments of this invention is increased by more than 60%, so that the magnetic flux concentration performance is significantly improved.

With reference to Fig. 22, compared to motors in the related art, the flux leakage coefficient of the motor using the rotor structure in the embodiments of this invention is reduced by more than 10%, so that the flux leakage is effectively reduced, and the performance of the motor is improved.

With reference to Fig. 23, compared to motors in the related art, the no-load flux linkage of the motor using the rotor structure in the embodiments of this invention is increased by more than 50%, so that the no-load flux linkage is effectively increased, and the performance of the motor is improved.

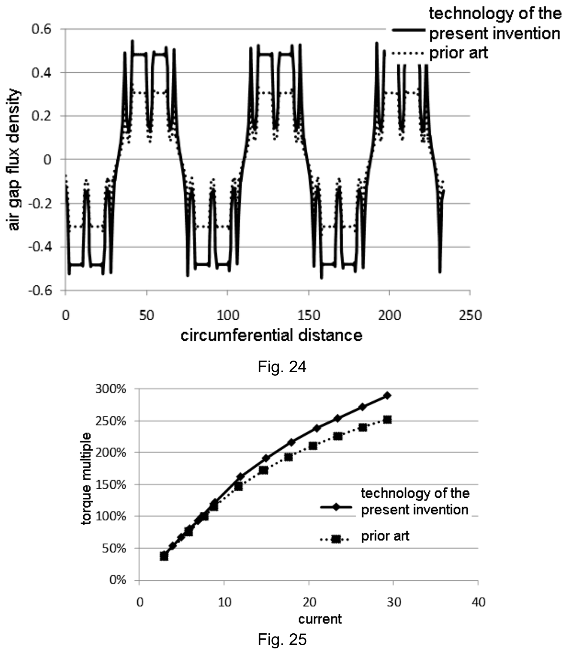

With reference to Fig. 24, compared to motors in the related art, the air gap flux density of the motor using the rotor structure in the embodiments of this invention is increased by more than 60%, so that the air gap flux density is effectively increased, the torque density of the motor is increased, and the output of the motor is increased.

With reference to Fig. 25, compared to motors in the related art, the advantage of the torque multiple of the motor using the rotor structure in the embodiments of this invention gradually becomes apparent with the increase of current, so that a higher torque multiple is achieved, the torque density of the motor is increased, and the output of the motor is increased.

According to an embodiment of this invention, a motor includes a stator structure and a rotor structure. The rotor structure is the above rotor structure.

It should be noted that the terms used here are merely used to describe specific implementations, but are not intended to limit exemplary implementations according to this invention. As used here, unless otherwise explicitly stated in the context, a singular form is also intended to comprise a plural form. In addition, it should be further understood that when the terms "contain" and/or "comprise" are used in this specification, the terms indicate that there is a feature, a step, an operation, a device, an assembly, and/or a combination thereof.

It should be noted that the terms "first", "second", and the like in the specification and claims of this invention and the above accompanying drawings are used to distinguish similar objects, but are not intended to describe a particular sequence or a precedence order. It should be understood that the data used in this way can be interchanged in appropriate circumstances, so that the implementations of this invention described here can be implemented in a sequence other than those illustrated or described here.

The above descriptions are merely some embodiments of this invention, but are not intended to limit this invention. For those skilled in the art, this invention may have various modifications and variations. Any modifications, equivalent substitutions, improvements, and the like made within the spirit and principle of this invention shall fall within the scope of protection of this invention.

## Claims

1. A rotor structure, comprising a rotor core (11), first permanent magnets (12), and a second permanent magnet (21), wherein the rotor core (11) is provided with mounting grooves, and the first permanent magnets (12) are mounted in the mounting grooves; along an axial direction of the rotor core (11), an axial height of the first permanent magnets (12) is greater than an axial height of the rotor core (11); the second permanent magnet (21) is of an integral structure; the second permanent magnet (21) comprises an axial portion (211) arranged at at least one axial end of the rotor core **(11);** and the axial portion (211) is provided with grooves (213), and parts of the first permanent magnets (12) extending out of the rotor core (11) along the axial direction are inserted into the grooves (213).

2. The rotor structure according to claim 1, wherein the second permanent magnet (21) is injection-molded magnetic steel.

3. The rotor structure according to claim 1, wherein the second permanent magnet (21) further comprises connecting portions (212), the connecting portions (212) are filled in through holes provided by the rotor core (11) or the mounting grooves, and axial portions (211), at two axial ends of the rotor core (11), of the second permanent magnet (21) are connected by the connecting portions (212) to form a whole.

4. The rotor structure according to claim 1, wherein the grooves (213) provided on the axial portion (211) of the second permanent magnet (21) does not penetrate through the axial portion (211), and a number of the grooves (213) is the same as a number of rotor magnetic poles.

5. The rotor structure according to claim 1, wherein the second permanent magnet (21) further comprises axial portions (211) and connecting portions (212), the second permanent magnet (21) cooperates with the first permanent magnets (12) by the grooves (213) provided on the axial portion (211), the first permanent magnet (12) and the second permanent magnet (21) are both magnetic flux sources, and no other magnetic conduction components are arranged in the rotor structure except for the rotor core (11).

6. The rotor structure according to claim 1, wherein a lug (214) is formed between adjacent grooves (213), and a position of a polar region of the lug (214) corresponds to a position of a polar region of the rotor core (11).

7. The rotor structure according to claim 6, wherein on a plane perpendicular to the axial direction of the rotor core (11), a shape of the polar region of the lug (214) is adapted to a shape of a corresponding polar region of the rotor core (11), and the polar region of the lug (214) fills the **corresponding** polar region of the rotor core (11).

8. The rotor structure according to claim 1, wherein at least one of the axial ends of the rotor core (11) is provided with the axial portion (211), and in the axial direction of the rotor core (11), the rotor core (11) and the axial portion (211) are attached together.

9. The rotor structure according to claim 1, wherein the second permanent magnet (21) is alternately magnetized at NS poles along the axial direction of the rotor core (11).

10. The rotor structure according to claim 1 or 9, wherein a polarity of the second permanent magnet (21) on a side close to the rotor core (11) is a first polarity, and polarities of two first permanent magnets (12) on two adjacent sides of the second permanent magnet (21) on the side close to the rotor core (11) are first polarities.

11. The rotor structure according to claim 6, wherein the axial height of the rotor core (11) is x, the axial height of the first permanent magnet (12) is y, y>x, an axial height of the axial portion (211) is z1, and an axial height of the lug (214) is z2, wherein 0.2×(y-x)≤z1≤1.6×(y-x).

12. The rotor structure according to claim 11, wherein 2×z2≥(y-x).

13. The rotor structure according to claim 12, wherein z2=0.5×(y-x).

14. The rotor structure according to claim 11, wherein 0.03≤(z1-z2)/z1≤0.7.

15. The rotor structure according to any one of claims 1 to 9, wherein on a plane perpendicular to the axial direction of the rotor core (11), an inner diameter of the second permanent magnet (21) is Di2, and an inner diameter of the rotor core (11) is Di1, wherein Di2≥Di1.

16. The rotor structure according to claim 15, wherein an outer circumferential side of the rotor core (11) is provided with limiting protrusions (111), and the limiting protrusions (111) extend laterally from both sides of the rotor core (11) in a circumferential direction and form a radial limit on the first permanent magnets (12).

17. The rotor structure according to any one of claims 1 to 9, wherein on a plane perpendicular to the axial direction of the rotor core (11), a maximum value of an outer diameter of the second permanent magnet (21) is Do2, and a maximum value of an outer diameter of the rotor core (11) is Do1, wherein Do2≤Do1.

18. The rotor structure according to claim 17, wherein Do2=Do1.

19. The rotor structure according to claim 2, wherein the second permanent magnet (21) is injection-molded ferrite or injection-molded neodymium iron boron.

20. The rotor structure according to claim 1, wherein the first permanent magnets (12) are a sintered permanent magnet or an injection-molded permanent magnet.

21. The rotor structure according to claim 1, wherein the rotor core (11) is formed by stacking silicon steel sheets, or the rotor core (11) is injection-molded magnetic steel; and on the plane perpendicular to the axial direction of the rotor core (11), along a radial direction, the rotor core (11) is alternately magnetized at NS poles.

22. The rotor structure according to claim 1, wherein the second permanent magnet (21) is coated by injection molding or filled on the rotor core (11), or the second permanent magnet (21), the rotor core (11), and the first permanent magnets (12) are separately manufactured and then assembled together.

23. The rotor structure according to claim 1, wherein the rotor structure is filled with plastic sealing materials at ends and internal gaps and molded and sealed into a whole.

24. A motor, comprising a stator structure and the rotor structure according to any one of claims 1 to 23.
